(19) Europäisches Patentamt / European Patent Office / Office européen des brevets

(11) **EP 3 425 701 A1**

(12) # EUROPEAN PATENT APPLICATION

(43) Date of publication:
**09.01.2019 Bulletin 2019/02**

(51) Int Cl.:
*H01M 4/131* (2010.01)          *H01M 4/485* (2010.01)
*H01M 10/054* (2010.01)          *C01G 23/04* (2006.01)

(21) Application number: **17305883.5**

(22) Date of filing: **06.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
- **CENTRE NATIONAL DE LA RECHERCHE SCIENTIFIQUE**
  **75016 Paris (FR)**
- **Université Pierre et Marie Curie - Paris 6 (UPMC)**
  **75005 Paris (FR)**
- **Technische Universität Berlin**
  **10623 Berlin (DE)**

(72) Inventors:
- **MA, Jiwei**
  **75013 PARIS (FR)**
- **DAMBOURNET, Damien**
  **92100 Boulogne-Billancourt (FR)**
- **REEVES, Kyle**
  **75010 Paris (FR)**
- **SALANNE, Mathieu**
  **75011 PARIS (FR)**
- **KOKETSU, Toshinari**
  **14165 Berlin (DE)**
- **STRASSER, Klaus-Peter**
  **10629 BERLIN (DE)**

(74) Representative: **Gevers & Orès**
     **41 avenue de Friedland**
     **75008 Paris (FR)**

(54) ## USE OF AMORPHOUS TITANIUM-BASED COMPOUND AS AN ELECTROACTIVE ELECTRODE MATERIAL FOR ALUMINIUM BATTERIES

(57)    The invention relates to an aluminium battery comprising an electrode made of a material comprising a titanium oxy-hydroxy hydrate, to the use of a titanium oxy-hydroxy hydrate in the manufacture of an electrode of an aluminium battery and to process for manufacturing an aluminium battery comprising a step of manufacturing an electrode comprising a titanium oxy-hydroxy hydrate.

The aluminium battery of the invention comprises at least two electrodes and an aluminium-based electrolyte wherein one of the electrodes is made of a material comprising a titanium oxy-hydroxy hydrate having the chemical formula I $TiO_x(OH)_y,nH_2O$ and having a local ordered structure over a distance of 1 nm inclusive as determined by Pair Distribution Function (PDF) obtained by synchrotron diffraction but having a disordered structure at a distance higher than 1 nm as shown by X-ray diffraction.

The invention finds application in the field of storage and release of energy.

EP 3 425 701 A1

**Description**

The invention relates to an aluminium battery comprising an electrode made of a material comprising a titanium oxy-hydroxy hydrate, to the use of a titanium oxy-hydroxy hydrate in the manufacture of an electrode of an aluminium battery and to process for manufacturing an aluminium battery comprising a step of manufacturing an electrode comprising a titanium oxy-hydroxy hydrate.

Nowadays, lithium-ion (Li-ion) batteries are the most efficient electrochemical storage devices whose demands largely increased because of a large panel of applications spanning grid storage, electronic devices and electric vehicles.

The continuous world-wide energy demands calls for more efficient, higher energies and greener electrochemical energy storage devices.

Moreover, the fears on lithium-shortage have motivated researches on alternative insertion chemistries such as sodium and more recently on aluminium.

Al-based batteries have been considered as a promising candidate beyond current lithium system, because of safety, abundance, and low cost of aluminium.

Aluminium is the most abundant metal, the third most abundant element in the Earth's crust and the cheapest.

More importantly, as aluminium can exchange up to three electrons and has a high density (2.7 g/cm$^{-3}$ at 25 °C), it has the highest volumetric capacity with 8,056 mAh.cm$^{-3}$ (vs. 2,042 mAh.cm$^{-3}$ for Li).

However, the development of rechargeable Al-ion batteries is impeded by intrinsic limitations related to the Al chemistry. In particular, current electrolytes can react with Al metal yielding to insulating solid-electrolyte-interface layer which restricts transports of charges, causing overpotential and thus altering the performances of the cell.

Indeed, known aluminium battery comprises two electrodes, one of the electrodes being made of Al metal, connected by an electrolyte which is a conductive material for the charge carriers, in the present case aluminium ions.

To overcome such limitations of current Al-ion batteries, numerous searches have been focused on the electrolyte.

Besides, titanium oxide ($TiO_2$) has been proposed as material for a negative electrode in lithium-ion batteries.

The invention aims to palliate the limitations of current Al-ion batteries.

For this aim, the invention proposes Al-ion batteries in which the negative electrode is made of a Ti-based compound.

Thus, the invention proposes an aluminium battery comprising at least two electrodes and an aluminium-based electrolyte wherein one of the electrodes is made of a material comprising a titanium oxy-hydroxy hydrate having the following chemical formula I:

$$TiO_x(OH)_y,nH_2O$$

in which

- 1.15 ≤ x ≤ 1.55,
- 0.9 ≤ y ≤ 1.7,
- 0.1 ≤ n ≤ 1, preferably 0.3 ≤ n ≤ 0.5, more preferably n = 0.41 and the following crystallographic Formula II:

$$Ti_{2-\beta}\square_{\beta}O_{4-4\beta}(OH)_{4\beta}.n_1H_2O$$

in which:

- β is comprised between 0.1 and 0.99, preferably β = 0.5,
- $n_1$ is comprised between 0.1 and 0.99, preferably $n_1$ = 0.55, and
- $\square$ represents a titanium vacancy,

said titanium oxy-hydroxy hydrate having a local ordered structure over a distance of 1 nm inclusive as determined by Pair Distribution Function (PDF) obtained by synchrotron diffraction but having a disordered structure at a distance higher than 1 nm as shown by X-ray diffraction.

In a preferred embodiment of the Al-battery of the invention, said electrode is made of a composite material comprising said titanium-hydroxy hydrate of chemical formula I and carbon.

In this case, preferably, said carbon is coated of said titanium oxy-hydroxy hydrate of chemical formula I.

Still preferably, said carbon is chosen in the group consisting of carbon nanotubes, carbon nanoparticles, graphite and mixtures thereof.

The invention also proposes the use of titanium oxy-hydroxy hydrate having the following chemical formula I:

$$TiO_x(OH)_y, nH_2O$$

in which

- $1.15 \leq x \leq 1.55$,
- $0.9 \leq y \leq 1.7$,
- $0.1 \leq n \leq 1$, preferably $0.3 \leq n \leq 0.5$, more preferably $n = 0.41$ and the following crystallographic Formula II:

$$Ti_{2-\beta}\square_{\beta}O_{4-4\beta}(OH)_{4\beta}.n_1H_2O$$

- in which:
- $\beta$ is comprised between 0.1 and 0.99, preferably $\beta = 0.5$,
- $n_1$ is comprised between 0.1 and 0.99, preferably $n_1 = 0.55$, and
- $\square$ represents a titanium vacancy,

said titanium oxy-hydroxy hydrate having a local ordered structure over a distance of 1 nm inclusive as determined by Pair Distribution Function (PDF) obtained by synchrotron diffraction but having a disordered structure at a distance higher than 1 nm as shown by X-ray diffraction, in the manufacture of an electrode of an aluminium battery.

In this use, preferably said titanium oxy-hydroxy hydrate of formula I is used together with carbon.

In this case, preferably, said carbon is coated of said titanium oxy-hydroxy hydrate of chemical formula I.

Still preferably, said carbon is chosen in a group consisting of carbon nanotubes, carbon nanoparticles, graphite, and mixtures thereof.

The invention furthermore proposes a process for manufacturing an aluminium battery comprising at least two electrodes and an aluminium-based electrolyte, comprising a step of manufacturing an electrode with a material comprising a titanium oxy-hydroxy hydrate having the following chemical formula I:

$$TiO_x(OH)_y, nH_2O$$

in which

- $1.15 \leq x \leq 1.55$,
- $0.9 \leq y \leq 1.7$,
- $0.1 \leq n \leq 1$, preferably $0.3 \leq n \leq 0.5$, more preferably $n = 0.41$ and the following crystallographic Formula II:

$$Ti_{2-\beta}\square_{\beta}O_{4-4\beta}(OH)_{4\beta}.n_1H_2O$$

in which:

- $\beta$ is comprised between 0.1 and 0.99, preferably $\beta = 0.5$,
- $n_1$ is comprised between 0.1 and 0.99, preferably $n_1 = 0.55$, and
- $\square$ represents a titanium vacancy,

said titanium oxy-hydroxy hydrate having a local ordered structure over a distance of 1 nm inclusive as determined by Pair Distribution Function (PDF) obtained by synchrotron diffraction but having a disordered structure at a distance higher than 1 nm as shown by X-ray diffraction.

Preferably, the process according to the invention further comprises a step of coating carbon with said titanium oxy-hydroxy hydrate of chemical formula I.

In this case, preferably, said carbon is chosen in the group consisting of carbon nanotubes, carbon nanoparticles, graphite and mixtures thereof.

The invention will be better understood and other features and advantages thereof will appear more clearly when reading the following description which is made in reference to the annexed Figures in which:

- Figure 1 shows the cyclic voltammogram obtained when cycling an electrochemical cell comprising a working electrode made of a Pt plate, a counter electrode made of Al, and a reference electrode made of Al and in which the electrolyte is 1-ethyl-3-methyl imidazolium chloride:$AlCl_3$ (EMImCl:$AlCl_3$) (1:1.1, molar ratio), at a scan rate of $50 mV.s^{-1}$,
- Figure 2 shows the galvanostatic discharge curves of an Al battery according to the invention comprising an electrode according to the invention,
- Figure 3 shows the galvanostatic discharge-charge curves of an Al battery comprising as working electrode an electrode made of a composite comprising anatase $TiO_2$, cycled against $Al^{3+}$/Al,
- Figure 4 shows the discharge-charge curves of an Al battery according to the invention cycled against $Al^{3+}$/Al,
- Figure 5 shows the DFT (Density Functional Theory) optimized structure with aluminium ion sitting in the interlayer of the titanium oxy-hydroxy hydrate compound used in the invention, and
- Figure 6 shows the DFT optimized structure with aluminium ion sitting in a titanium vacancy of the titanium oxy-hydroxy hydrate used in the invention.

Al-ion batteries are rechargeable batteries in which aluminium ion provide electric energy by flowing from the negative anode of the battery to its positive electrode, the cathode. During the recharge, aluminium ions come back to the anode.

An example of Al-ion battery is a battery comprising:

- an electrode comprising an electroactive compound, an electronic conductor and a binder,
- a non-aqueous electrolyte containing $Al^{3+}$,
- an electrode made of Al metal, and
- a separator to prevent physical contact between the two electrodes.

The invention proposes an Al-ion electrochemical battery in which the electrode comprising an electroactive material is an electrode made of a material comprising and a titanium oxy-hydroxy hydrate having the following chemical formula I:

- $1.15 \leq x \leq 1.55$,
- $0.9 \leq y \leq 1.7$,
- $0.1 \leq n \leq 1$, preferably $0.3 \leq n \leq 0.5$, more preferably $n = 0.41$ and the following crystallographic Formula II:

$$Ti_{2-\beta}\square_{\beta}O_{4-4\beta}(OH)_{4\beta}.n_1H_2O$$

in which:

- $\beta$ is comprised between 0.1 and 0.99, preferably $\beta = 0.5$,
- $n_1$ is comprised between 0.1 and 0.99, preferably $n_1 = 0.55$, and
- $\square$ represents a titanium vacancy,

said titanium oxy-hydroxy hydrate having a local ordered structure over a distance of 1 nm inclusive as determined by Pair Distribution Function (PDF) obtained by synchrotron diffraction but having a disordered structure at a distance higher than 1 nm as shown by
X-ray diffraction.

The titanium oxy-hydroxy hydrate of chemical formula I is preferably used in combination with carbon and preferably under the form of a composite material consisting of carbon coated with the amorphous titanium oxy-hydroxy hydrate of formula I.

The carbon which is used can be graphite, carbon nanotubes, carbon nanoparticles or mixtures thereof.

The invention also proposes the use of this amorphous titanium oxy-hydroxy hydrate of formula I above the manufacture of an electrode of an aluminium battery.

Furthermore, the invention proposes a process for manufacturing an aluminium battery comprising a step of manufacturing an electrode comprising the above cited titanium oxy-hydroxy hydrate of formula I.

This titanium oxy-hydroxy hydrate of formula I, whose local structure (over a distance of 1 nm inclusive) which is that of lepidocrocite, is a layered-like compound having a disordered structure at a distance higher than 1 nm.

In the present invention, the terms "disordered structure" and "amorphous structure" designate the structure of a material or a compound having a diffractogram obtained by a diffraction of X-ray (ray $CuK\alpha$) at a scan between 10 and 80° at a speed of 0.5°/min which does not have peaks which can be distinguished from the noise background.

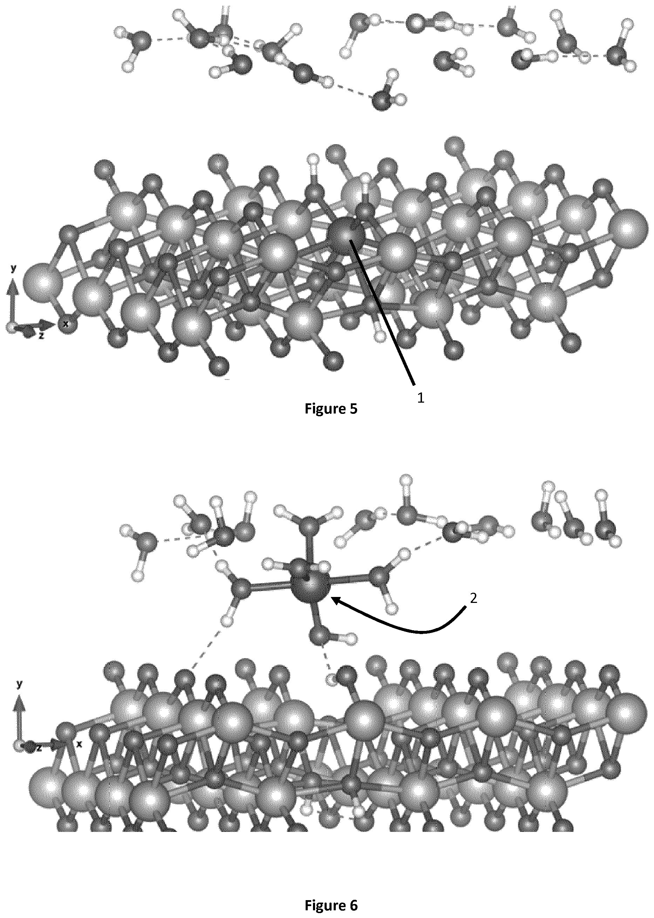

The local lepidocrocite structure of the titanium oxy-hydroxy hydrate used in the invention as material for an electrode of an Al-battery is an inter-layered structure having vacancy, as shown in Figures 5 and 6 annexed.

The crystallographic formula of this compound is the following Formula II:

$$Ti_{2-\beta}\square_{\beta}O_{4-4\beta}(OH)_{4\beta}.n_1H_2O$$

in which:

- $\beta$ is comprised between 0.1 and 0.99, preferably $\beta = 0.5$,
- $n_1$ is comprised between 0.1 and 0.99, preferably $n_1 = 0.55$, and
- $\square$ represents a titanium vacancy.

This crystallographic Formula II is representative of the structural arrangement of the titanium oxy-hydroxy hydrate of formula I used in the invention whereas the chemical formula I is representative of the elemental composition obtained by thermogravimetric analysis of this compound.

The inter-layered structure of lepidocrocite is a structure comprising three layers: two layers of oxy-hydroxy titanium having titanium vacancy separated by a layer of molecules of free $H_2O$.

In the structure of this compound,, the physical crystallographic sites possibly enabling the reversible $Al^{3+}$ storage have been investigated by the electronic structure calculations via the density functional theory with the Hubbard correction.

Two sites were considered: aluminium ions present in the water interlayer and in the titanium vacancy.

As will be demonstrated in the examples, it was determined that both sites are energetically favourable locations for an aluminium ion, with negative formation energies.

In order to demonstrate that the use of the amorphous titanium oxy-hydroxy hydrate of formula I is an advantageous electrode material in Al-ion electrochemical battery, the inventors have carried out an electrochemical characterization of Al-battery comprising, as working electrode, an electrode made of a composite material comprising the amorphous titanium oxy-hydroxy hydrate of formula I as compared to the an Al-battery comprising, as working electrode, an electrode made of $TiO_2$.

**Comparative example 1:**

In this example, an electrochemical cell comprising a working electrode which is a platinum plate, a counter electrode made of Al, and a reference electrode also made of Al, was electrochemically characterized.

The electrolyte was a chloroaluminate-based ionic liquid prepared as follows: $AlCl_3$ (99.99%, Ultra-dry, Alfa Aesar), powder was slowly added to EMImCl (98%, Aldrcih) (1-ethyl-3-methyl imidazolium chloride under stirring so that the molar ratio of $EMImCl:AlCl_3$ was 1:1.1. The mixture was stirred overnight, then heated at 100°C under vacuum (< 1Pa) overnight. The preparation was conducted in an argon-filled glove box (Mbraun, Germany) with $H_2O$ and $O_2$ contents below 1 ppm.

This electrochemical cell was cycled at a scan rate of $50mVs^{-1}$ in the potential range of -1.0V to + 2.5V vs. $Al^{3+}/Al$

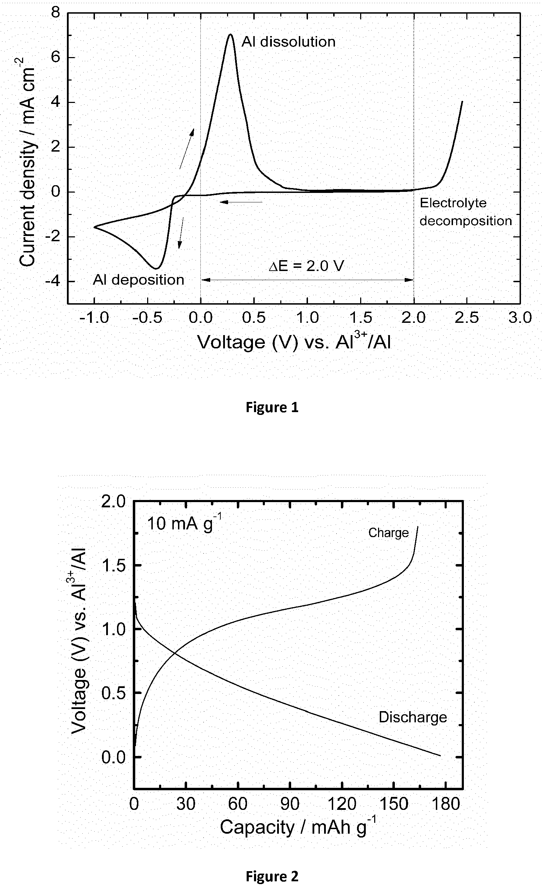

Figure 1 shows the obtained cyclic voltammogram.

One can see from figure 1 that the electrochemical stability window of the electrolyte solution is around 2.0 V vs. $Al^{3+}/Al$ and therefore suitable to test active electrode materials. Moreover, Figure 1 shows that the electrochemical Al deposition/dissolution is reversible.

**Example 1**

In this example, the Al-battery is an Al-battery according to the invention.

In this Al-battery, the reference electrode and the counter electrode are made of metallic Al (99.9%, Good fellow).

Glass fiber filter (Whatman Grade GF/D) was used as a separator. The working electrode was composed of:

- 80 wt.% of a titanium oxy-hydroxy hydrate of formula I in which x =1.35, y = 1.30 and n = 0.41 and of Formula II in which $\beta = 0.5$ and $n_1 = 0.55$,
- 10 wt.% SuperP (Timcal) carbon, and
- 10 wt.% PTFE (poly(tetrafluoroethylene)) (Sigma-Aldrich) binder.

To obtain the working electrode, the compound of formula I, carbon and PTFE were dissolved into -Milli-Q water and well grounded using a mortar, and then the obtained slurry was casted on a glassy carbon plate. The geometrical active mass density of the working electrode was controlled around 2 mg.cm$^{-2}$.

The electrolyte was EMImCl: AlCl$_3$ (1:1.1).

All electrochemical measurements were carried out using Swagelok-type cells assembled in an Ar-filled glove box (Mbraun, Germany) with H$_2$O and O$_2$ contents below 1 ppm.

The battery was cycled under 10 mA g$^{-1}$ in the potential range of 0.01-1.8 V vs. Al$^{3+}$/Al

Figure 2 shows the first discharge and charge curves measured at 10 mA.g$^{-1}$.

As can be seen in figure 2, the first discharge capacity reached 177 mAh g$^{-1}$ and further stabilized to 164 mAh g$^{-1}$ upon charge.

Following a redox reaction implying the Ti$^{4+}$/Ti$^{3+}$ redox couple and 3 electrons exchanged per Al, the insertion reaction can be expressed by the following equation:

$$\text{Ti}_{1.5}\square_{0.5}\text{O}_2(\text{OH})_2.0.55\text{H}_2\text{O} + x\text{Al}^{3+} + 3xe^- = \text{Al}_x\text{Ti}_{1.5}\square_{0.5}\text{O}_2(\text{OH})_2.0.55\text{H}_2\text{O} \ (1)$$

where the maximum x value is 0.50 corresponding to a theoretical capacity of 270 mAh g$^{-1}$.

Thus, the titanium oxy-hydroxy hydrate of formula I allows to intercalate reversibly up to ~0.2 mole of Al$^{3+}$ per formula unit.

Moreover, the slopping discharge-charge curves are characteristic of the ion-intercalation in amorphous materials with minor structural changes upon redox reactions.

**Comparative example 2:**

An Al-battery has been also electrochemically characterized as in example 1 and in comparative example 1 except that its working electrode was made of a pure oxide TiO$_2$ having the anatase type structure, a material known for its insertion properties, particularly vs. Li$^+$/Li.

The battery was cycled under 20 mA g$^{-1}$ in the potential range of 0.01-1.8 V vs. Al$^{3+}$/Al.

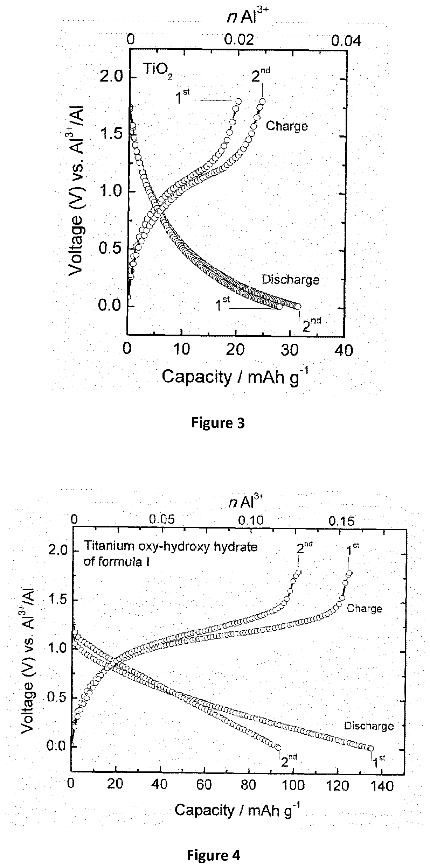

Figure 3 shows the first two cycles under 20 mA g$^{-1}$ obtained with this battery.

**Example 2:**

The Al-battery of example 1 has been cycled under 20 mA g$^{-1}$ in the potential range of 0.01-1.8 V vs. Al$^{3+}$/Al as the Al-battery of a comparative example 2.

Figure 4 shows the galvanostatic discharge-charge curves obtained with this battery.

As can be seen from the Figure 3 and Figure 4, the Al-battery of the invention has a capacity which is five-times higher than the capacity of the Al-battery having a working electrode made of pure oxide TiO$_2$. Thus, the titanium oxy-hydroxy hydrate used for manufacturing the electrode of a battery according to the invention demonstrates a superior ability to store Al-ion.

While not wishing to be bound by this theory, the inventors explain this higher ability to store Al-ions of the amorphous titanium oxy-hydroxy hydrate of formula I by the local lepidocrocite crystallographic structure of this compound of formula I which comprises two types of possible physical crystallographic sites enabling the reversible Al$^{3+}$ storage: the titanium vacancies and the layer of free water.

Indeed, the active material (Ti$_{1.5}\square_{0.5}$O$_2$(OH)$_2$.0.55H$_2$O) was investigated by the electronic structure calculations via the density functional theory with the Hubbard correction, in order to determine the energy associated with the intercalation of aluminium ions into the structure of Ti$_{1.5}\square_{0.5}$O$_2$(OH)$_2$.0.55H$_2$O.

This energy is calculated as being:

$$\Delta E = E(\text{Al(III)}\text{Ti}_{1.5}\square_{0.5}\text{O}_2(\text{OH})_2.0.55\text{H}_2\text{O}) - [E(\text{Ti}_{1.5}\square_{0.5}\text{O}_2(\text{OH})_2.0.55\text{H}_2\text{O}) + E(\text{Al(III)})].$$

Two sites were considered: aluminium ions present in the water interlayer and aluminium ions present in the titanium vacancy.

The optimized structures are shown in Figures 5 and 6.

More precisely, Figure 5 shows the structure with the Al ion, noted 1 in figure 5, intercalated in a titanium vacancy of the local lepidocrocite structure of the compound of formula I and Figure 6 shows the intercalation of the aluminium ion, noted 2 in figure 6, in the water layer of the local lepidocrocite structure of the compound of formula I.

It was determined that both sites are energetically favorable locations for an aluminium ion with negative formation energies, i.e., the formation energies of Al in a titanium vacancy and in water interlayer are -241.22 meV/formula unit (f.u.) and -243.238714269 meV/f.u., respectively.

**Claims**

1. Aluminium battery comprising at least two electrodes and an aluminium-based electrolyte wherein one of the electrodes is made of a material comprising a titanium oxy-hydroxy hydrate having the following chemical formula I:

$$TiO_x(OH)_y, nH_2O$$

in which

- $1.15 \leq x \leq 1.55$,
- $0.9 \leq y \leq 1.7$,
- $0.1 \leq n \leq 1$, preferably $0.3 \leq n \leq 0.5$, more preferably $n = 0.41$ and the following crystallographic Formula II:

$$Ti_{2-\beta}\square_\beta O_{4-4\beta}(OH)_{4\beta}.n_1 H_2 O$$

- in which:
- $\beta$ is comprised between 0.1 and 0.99, preferably $\beta = 0.5$,
- $n_1$ is comprised between 0.1 and 0.99, preferably $n_1 = 0.55$, and
- $\square$ represents a titanium vacancy,

said titanium oxy-hydroxy hydrate having a local ordered structure over a distance of 1 nm inclusive as determined by Pair Distribution Function (PDF) obtained by synchrotron diffraction but having a disordered structure at a distance higher than 1 nm as shown by X-ray diffraction.

2. The aluminium battery according to claim 1 wherein said electrode made of a composite material comprising said titanium-hydroxy hydrate of chemical formula I and carbon, and wherein said carbon is coated of said titanium oxy-hydroxy hydrate of chemical formula I.

3. The aluminium battery according to claim 2, wherein said carbon is chosen in the group consisting of carbon nanotubes, carbon nanoparticles, graphite and mixtures thereof.

4. Use of titanium oxy-hydroxy hydrate having the following chemical formula I:

$$TiO_x(OH)_y, nH_2O$$

in which

- $1.15 \leq x \leq 1.55$,
- $0.9 \leq y \leq 1.7$,
- $0.1 \leq n \leq 1$, preferably $0.3 \leq n \leq 0.5$, more preferably $n = 0.41$ and the following crystallographic Formula II:

$$Ti_{2-\beta}\square_\beta O_{4-4\beta}(OH)_{4\beta}.n_1 H_2 O$$

- in which:
- $\beta$ is comprised between 0.1 and 0.99, preferably $\beta = 0.5$,
- $n_1$ is comprised between 0.1 and 0.99, preferably $n_1 = 0.55$, and
- $\square$ represents a titanium vacancy,

said titanium oxy-hydroxy hydrate having a local ordered structure over a distance of 1 nm inclusive as determined by Pair Distribution Function (PDF) obtained by synchrotron diffraction but having a disordered structure at a distance higher than 1 nm as shown by X-ray diffraction, in the manufacture of an electrode of an aluminium battery.

5. The use according to claim 4 wherein said titanium oxy-hydroxy hydrate of formula I is used in combination with carbon and wherein said carbon is coated of said titanium oxy-hydroxy hydrate of chemical formula I.

6. The use according to claim 4 wherein said carbon is chosen in the group consisting of carbon nanotubes, carbon nanoparticles, graphite, and mixtures thereof.

7. A process for manufacturing an aluminium battery comprising at least two electrodes and an aluminium-based electrolyte, comprising a step of manufacturing an electrode with a material comprising a titanium oxy-hydroxy hydrate having the following chemical formula I:

$$TiO_x(OH)_y,nH_2O$$

in which

- $1.15 \leq x \leq 1.55$,
- $0.9 \leq y \leq 1.7$,
- $0.1 \leq n \leq 1$, preferably $0.3 \leq n \leq 0.5$, more preferably $n = 0.41$ and the following crystallographic Formula II:

$$Ti_{2-\beta}\square_\beta O_{4-4\beta}(OH)_{4\beta}.n_1H_2O$$

in which:

- $\beta$ is comprised between 0.1 and 0.99, preferably $\beta = 0.5$,
- $n_1$ is comprised between 0.1 and 0.99, preferably $n_1 = 0.55$, and
- $\square$ represents a titanium vacancy,

said titanium oxy-hydroxy hydrate having a local ordered structure over a distance of 1 nm inclusive as determined by Pair Distribution Function (PDF) obtained by synchrotron diffraction but having a disordered structure at a distance higher than 1 nm as shown by X-ray diffraction.

8. The process according to claim 7 wherein said step of manufacturing an electrode comprising a titanium oxy-hydroxy hydrate of chemical formula I further comprises step of coating carbon with said titanium oxy-hydroxy hydrate of chemical formula I.

9. The process according to claim 8 wherein said carbon is chosen in the group consisting of carbon nanotubes, carbon nanoparticles, graphite and mixtures thereof.

Figure 1

Figure 2

Figure 3

Figure 4

**Figure 5**

**Figure 6**

Europäisches
Patentamt

European
Patent Office

Office européen
des brevets

## EUROPEAN SEARCH REPORT

Application Number

EP 17 30 5883

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2002 298862 A (TOSHIBA CORP) 11 October 2002 (2002-10-11) * paragraphs [0043] - [0045] * ----- | 1-9 | INV. H01M4/131 H01M4/485 H01M10/054 C01G23/04 |
| A | CN 104 269 540 A (POWERALL CO LTD) 7 January 2015 (2015-01-07) * the whole document * ----- | 1-9 | |
| A | US 2012/082905 A1 (BROWN GILBERT M [US] ET AL) 5 April 2012 (2012-04-05) * the whole document * ----- | 1-9 | |

TECHNICAL FIELDS
SEARCHED (IPC)

H01M

The present search report has been drawn up for all claims

| Place of search | Date of completion of the search | Examiner |
|---|---|---|
| Munich | 31 August 2017 | Meini, Stefano |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 30 5883

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2017

| Patent document cited in search report | | Publication date | Patent family member(s) | | Publication date |
|---|---|---|---|---|---|
| JP 2002298862 | A | 11-10-2002 | JP | 4079602 B2 | 23-04-2008 |
| | | | JP | 2002298862 A | 11-10-2002 |
| CN 104269540 | A | 07-01-2015 | NONE | | |
| US 2012082905 | A1 | 05-04-2012 | US | 2012082905 A1 | 05-04-2012 |
| | | | US | 2017033397 A1 | 02-02-2017 |

EPO FORM P0459

For more details about this annex : see Official Journal of the European Patent Office, No. 12/82